# FASCICULE DE BREVET EUROPEEN

(11) **EP 0 489 627 B1**
(45) Date de publication et mention de la délivrance du brevet: **20.04.1994**
(21) Numéro de dépôt: 91403231.3
(22) Date de dépôt: 29.11.1991
(51) Int. Cl.: B60M 1/20, B60M 1/12

(54) **Dispositif d'alimentation électrique aérienne de véhicules ferroviaires, comportant un conducteur souple et escamotable horizontalement, et ligne d'alimentation électrique comportant au moins un tel dispositif**
Elektrische Oberleitungsversorgungseinrichtung für Schienenfahrzeuge mit einer biegsamen und horizontal schwenkbaren Leitung sowie elektrisches Leistungskabel mit einer solchen Vorrichtung
Railway vehicle overhead electrical feeding device with a flexible and horizontally retractable cable and electrical feeding line using the same

(30) Priorité: 03.12.1990 FR 9015106
(43) Date de publication de la demande: 10.06.1992
(73) Titulaire: SOCIETE NATIONALE DES CHEMINS DE FER FRANCAIS, F-75436 Paris Cedéx 09 (FR)
(72) Inventeur: Guigon, Marc, F-77360 Vaires-sur-Marne (FR); Vogt, Pierre, F-91370 Verrières-le-Buisson (FR)
(74) Mandataire: Casalonga, Axel

(56) Documents cités:
- DE-A- 1 803 762

## Description

La présente invention concerne un dispositif permettant l'alimentation électrique aérienne de véhicules circulant sur une voie ferrée.

Elle concerne également une ligne d'alimentation électrique comportant au moins un tel dispositif.

Les lignes d'alimentation électrique aériennes comportent généralement un ou deux conducteurs électriques souples suspendus au-dessus de la voie par l'intermédiaire d'une suspension appelée "caténaire". Cette caténaire comprend un câble-porteur soutenu de point en point par des poteaux, le profil de ce câble-porteur entre deux points pouvant être assimilé à une parabole, compte-tenu du faible rapport entre les flèches et les portées.

Ces caténaires s'avèrent très encombrantes quand il s'agit notamment de décharger des wagons, car il est impossible d'amener un engin de levage au-dessus de la voie. Il est donc nécessaire de déplacer les wagons à décharger sur des voies sans caténaire à l'aide de motrices à moteur thermique.

La demande de brevet allemand 1 803 762 (LICENTIA) décrit un dispositif d'escamotage de caténaire dans une zone de chargement dans lequel le conducteur électrique est déplacé horizontalement. Les moyens employés pour obtenir ce résultat sont cependant très complexes et nécessitent la présence de colonnes verticales dont les câbles de maintien restent tendus au-dessus de la voie ferrée qui ne se trouve donc pas totalement dégagée pour le chargement.

La présente invention a pour but d'éliminer cet inconvénient, en assurant une libération totale de la partie de caténaire située au-dessus de la voie, ce qui permet d'utiliser des installations de manutention qui déchargent ou qui chargent les wagons verticalement par rapport à une voie de circulation. Cette libération de la voie est obtenue par un escamotage horizontal de la caténaire sur une longueur au moins égale à la longueur d'une zone de manutention et de stockage, comportant de telles installations de manutention, cette longueur pouvant atteindre par exemple 800 mètres, et ce en utilisant des moyens très simples.

Le dispositif de l'invention permettant l'alimentation électrique aérienne de véhicules circulant sur une voie ferrée comporte au moins un conducteur souple escamotable horizontalement et parallèlement à la voie ferrée sur une longueur au moins égale à celle d'une zone de manutention et de stockage.

Selon l'invention, le conducteur souple est suspendu à une extrémité d'au moins deux moyens de suspension parallèles entre eux, pivotant horizontalement et simultanément d'environ 1/4 de tour, le conducteur souple étant à chacune de ses extrémités, relié à un câble de tension qui est guidé pour être écarté de la voie et tendu par un moyen de tension, ce moyen étant de préférence un contrepoids appliquant une tension verticale.

Selon une autre caractéristique de l'invention, chaque moyen de suspension comporte un bras porteur qui porte le conducteur souple et un bras d'entraînement relié à un moyen d'entraînement.

Le bras support et le bras d'entraînement de chaque moyen de suspension forment entre eux un angle d'environ 135°C, ce qui permet d'obtenir un faible déplacement latéral du câble d'entraînement lors de la rotation de 90° des moyens de suspension.

Les moyens de suspension sont répartis entre un moyen de suspension central, deux moyens de suspension d'extrémité, et des moyens de suspension intermédiaires, le conducteur étant relié mécaniquement au moyen de suspension central afin d'assurer son entraînement.

Selon un mode de réalisation avantageux, l'extrémité de chaque bras d'entraînement est reliée mécaniquement à un moyen d'entraînement par l'intermédiaire d'un dispositif mécanique tournant autour d'un axe vertical, et le moyen d'entraînement est un câble "sans fin" tendu entre deux poulies et entraîné directement par un moyen moteur et par l'intermédiaire du bras d'entraînement du moyen de suspension central, lui-même entraîné directement par un autre moyen moteur.

La présente invention a également pour objet une ligne d'alimentation électrique aérienne et, selon l'invention, elle comporte un dispositif tel que décrit précédemment, et à chaque extrémité de ce dispositif, un autre conducteur souple non escamotable s'étendant entre une zone de manutention et de stockage et une ligne à caténaire du réseau. Ces deux autres conducteurs constituent chacun une zone dite de protection électrique. En effet, chaque caténaire du réseau est ainsi éloignée de la zone de manutention et de stockage et, lors d'opérations dans cette zone, le courant d'alimentation est coupé dans ces deux conducteurs ainsi que dans le conducteur escamotable.

Selon une autre caractéristique, les deux conducteurs souples sont à chacune de leurs extrémités reliés à un câble de tension qui est guidé pour être écarté de la voie et tendu par un moyen de tension, qui est de préférence un contrepoids appliquant une tension verticale.

Il est décrit ci-après, à titre d'exemple nullement limitatif et en référence aux dessins annexés, un dispositif et une ligne d'alimentation selon l'invention.
La figure 1 est une vue de dessus très schématique, montrant une voie ferrée traversant une zone de manutention et de stockage, une extrémité de chaque zone dite de protection, et le dispositif de l'invention muni d'un seul conducteur souple, ce conducteur souple étant en position active au-dessus de la voie ferrée;
la figure 2 est une vue analogue à la figure 1, montrant le conducteur en position escamotée;
la figure 3 est une vue de dessus montrant une extrémité du dispositif selon le détail III de la figure 1, donc en vue de dessus;
la figure 4 est une vue de face du dispositif illustré sur la figure 3;
la figure 5 est une vue selon V-V de la figure 4;
la figure 6 est une vue selon VI-VI de la figure 4.

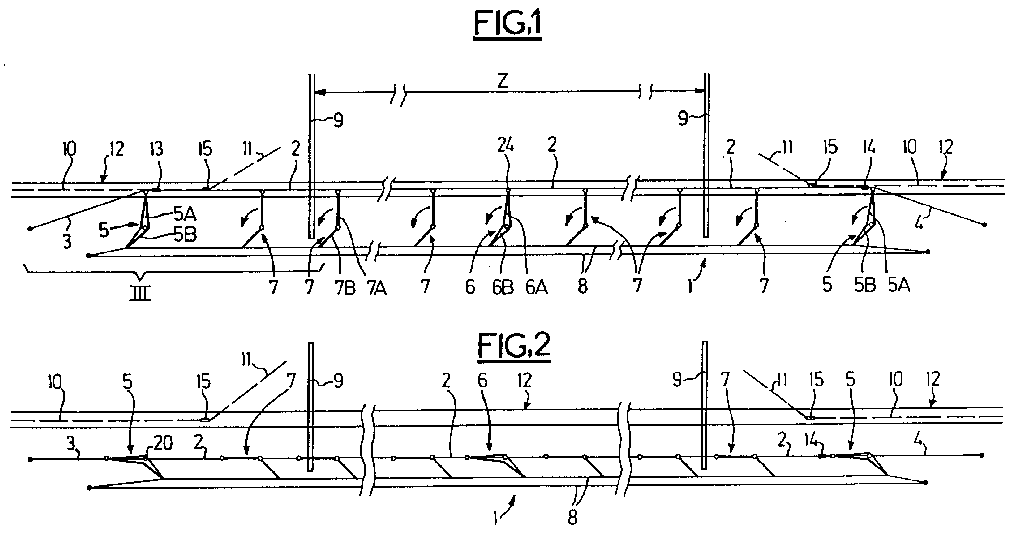

Dans la figure 1, le dispositif d'alimentation 1 comporte un conducteur souple 2, relié à une extrémité à un câble de tension 3 et à son autre extrémité à un autre câble de tension 4, des moyens de suspension pivotants appelés ci-après consoles (deux consoles d'extrémités 5, une console centrale 6 et une pluralité de consoles intermédiaires 7) et un câble d'entraînement 8 des consoles 5, 6, 7. Le conducteur souple 2 est relié au câble 3 par l'intermédiaire d'un dispositif de raccordement 13 muni d'un isolateur, et relié au câble de tension 4 par l'intermédiaire d'un dispositif de raccordement 14 muni également d'un isolateur.

Chaque console 5, 6, 7 comporte un bras porteur 5A, 6A, 7A et un bras d'entraînement 5B, 6B, 7B, ces deux bras étant solidaires l'un de l'autre. le conducteur souple 2 est supporté au-dessus de la voie ferrée 12 et entre les deux bras porteurs d'extrémités 5A par tous les bras porteurs 7A de point en point. De ce fait, la variation de la flèche du conducteur souple 2 est quasi nulle, ce qui permet d'abaisser au maximum le dispositif et d'obtenir ainsi la plus faible hauteur de passage sous des rails aériens 9 installés dans la zone de manutention Z.

La figure 1 montre cette zone de manutention et de stockage, délimitée par les deux rails aériens 9 d'extrémités. Entre ces deux rails 9, cette zone Z comporte une pluralité de rails non représentés, un couple de rails servant de chemin de roulement pour un appareil de manutention.

La figure 1 montre également l'extrémité de deux conducteurs 10 reliés chacun à un câble de tension 11 par l'intermédiaire d'un dispositif de raccordement 15 muni d'un isolateur. Chaque conducteur 10 s'étend environ entre l'extrémité de la zone Z et la caténaire du réseau non représentée. Chaque conducteur 10 représente une zone de protection électrique.

La figure 2 montre la position du conducteur 2 dégagé de la voie ferrée 12 après rotation de toutes les consoles 5, 6, 7. Le dégagement latéral du conducteur 2 est de l'ordre d'environ 3 mètres. La rotation de toutes les consoles s'effectue sur 90°, c'est-à-dire que les bras porteurs 5A, 6A, 7A qui étaient perpendiculaires à la voie, sont maintenant parallèles à la voie et les bras d'entraînement 5B, 6B, 7B qui étaient inclinés vers la gauche de la figure de 45° environ, sont maintenant inclinés vers la droite de 45° environ. Tous les bras d'entraînement 5B, 6B, 7B sont reliés mécaniquement au câble d'entraînement 8 et le déplacement latéral de ce câble vers la droite de la figure 1, entraîne une rotation de tous les bras d'entraînement et de tous les bras porteurs, donc un déplacement latéral du conducteur 2, mais aussi un déplacement longitudinal qui sera explicité ultérieurement.

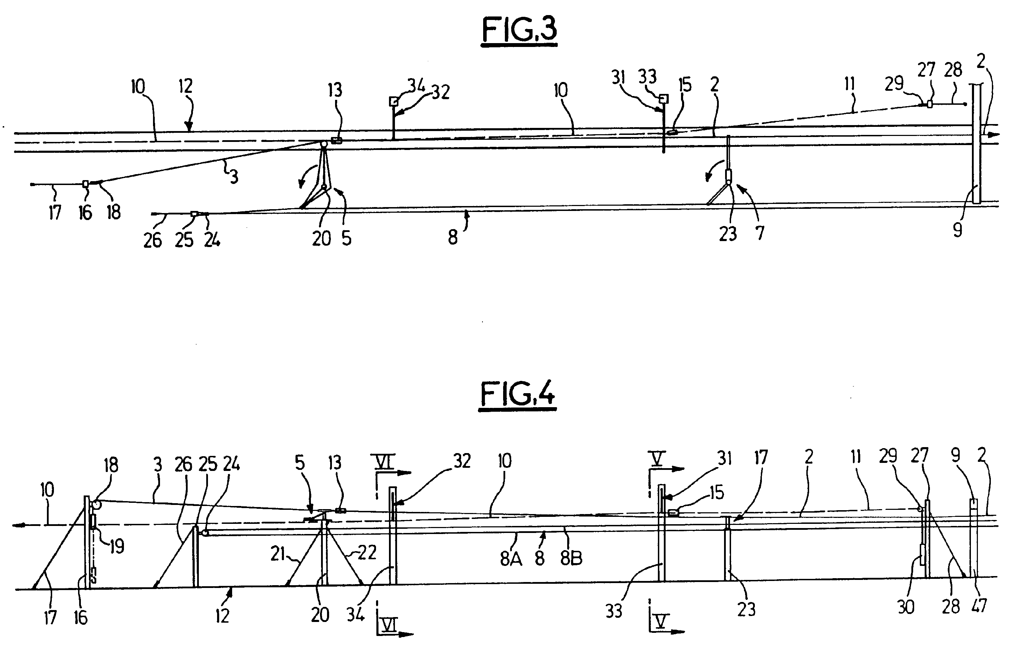

La figure 3 montre de manière plus précise l'extrémité "gauche" du dispositif selon le repère III de la figure 1, et la figure 4 montre une vue de face de la figure 3. On retrouve donc, dans ces deux figures 3 et 4, le conducteur souple 2, un seul câble de tension 3, une console d'extrémité 5, une console intermédiaire 7, un conducteur 10 et un rail aérien 9 porté par un poteau 47 (visible en figure 4), ce rail et son poteau constituant l'extrémité "gauche" de la zone Z de manutention et de stockage.

Le câble 3 aboutit à un poteau 16 renforcé par un câble de renfort 17 tendu en biais, l'extrémité de ce poteau 16 portant une poulie 18, sur laquelle passe le câble de tension 3. Un contrepoids 19, bien visible en figure 4, est fixé à l'extrémité du câble 3, afin de tendre ce câble en permanence. Le conducteur 2 est dévié de la voie 12 verticalement vers le haut, depuis la console intermédiaire 7 jusqu'à la console d'extrémité 5. Le câble 3 est également dévié de la voie ferrée 12 verticalement vers le haut, mais aussi latéralement, comme le montre la figure 3, entre la console d'extrémité 5 et le poteau 16.

La console d'extrémité 5 est portée par un poteau 20 dont l'extrémité supérieure comporte un axe de rotation pour le bras porteur 5A et le bras d'entraînement 5B. Ce poteau est renforcé par deux câbles de renfort 21, 22, tendus en biais. L'autre console d'extrémité 5 non visible sur les figures 3 et 4, est bien entendu montée de la même manière.

La console intermédiaire 7 est portée par un poteau 23 dont l'extrémité supérieure porte l'axe de rotation du bras porteur 7A et du bras d'entraînement 7B. Bien entendu, toutes les autres consoles intermédiaires sont montées de la même manière.

Tous les bras de chaque console peuvent être constitués de barres triangulées. L'isolement électrique du conducteur 2 sur les consoles, peut être obtenu par un isolateur à axe horizontal ou un groupe d'isolateurs de façon classique.

Le câble d'entraînement 8 est monté tendu entre deux poulies 24 dont une seule est représentée. Cette poulie 24 est portée par un poteau 25 renforcé par un câble de renfort 26 tendu en biais. Le câble d'entraînement comporte deux brins, un brin supérieur 8A et un brin inférieur 8B, le brin supérieur 8A de ce câble étant relié à tous les bras d'entraînement 5B, 6B, 7B des consoles 5, 6, 7, par l'intermédiaire d'un dispositif tournant autour d'un axe vertical.

Le conducteur souple 2 est simplement posé sur les bras porteurs 5A, 7A. Il est cependant fixé au bras porteur 6A de la console centrale 6, en un point 24 (figure 1) qui constitue un point d'attache fixe appelé aussi "point d'anticheminement". Le conducteur 2 peut aussi être attaché en plusieurs points.

Le déplacement du conducteur souple 2 peut se faire par un moyen moteur entraînant le câble d'entraînement 8 en translation, ce qui provoque la rotation de toutes les consoles ou par un autre moyen moteur entraînant la console centrale 6 en rotation, ce qui provoque l'entraînement en translation du câble 8, donc la rotation de toutes les autres consoles. Bien entendu, l'installation peut comporter deux moyens moteur agissant simultanément. Ces deux moyens moteur sont classiques et ne sont pas représentés.

Le conducteur souple 10 est relié à un câble de tension 11 par l'intermédiaire d'un dispositif de raccordement 15 muni d'un isolateur. Ce conducteur 10 constitue une zone de protection pour les motrices électriques entre la caténaire représentée par le conducteur souple escamotable 2 et la caténaire du réseau qui se situe en-dehors des figures 3 et 4. Ces figures ne montrent que l'extrémité "droite" de la zone de protection, c'est-à-dire le conducteur 10 et son câble de tension 11 aboutissant à un poteau 27 renforcé par un câble de renfort 28 tendu en biais. Le poteau 27 porte une poulie 29 sur laquelle passe le câble 11.

Un contrepoids 30 est fixé à l'extrémité du câble 11 afin de tendre ce câble en permanence. Bien entendu, à l'autre extrémité du conducteur 10, non représenté, ce conducteur est relié à un câble de tension lui-même relié à un contrepoids. Le conducteur 10 est porté par des systèmes de suspension dont seulement deux systèmes 31, 32 sont représentés. Ces systèmes sont montés chacun sur un poteau, respectivement 33, 34.

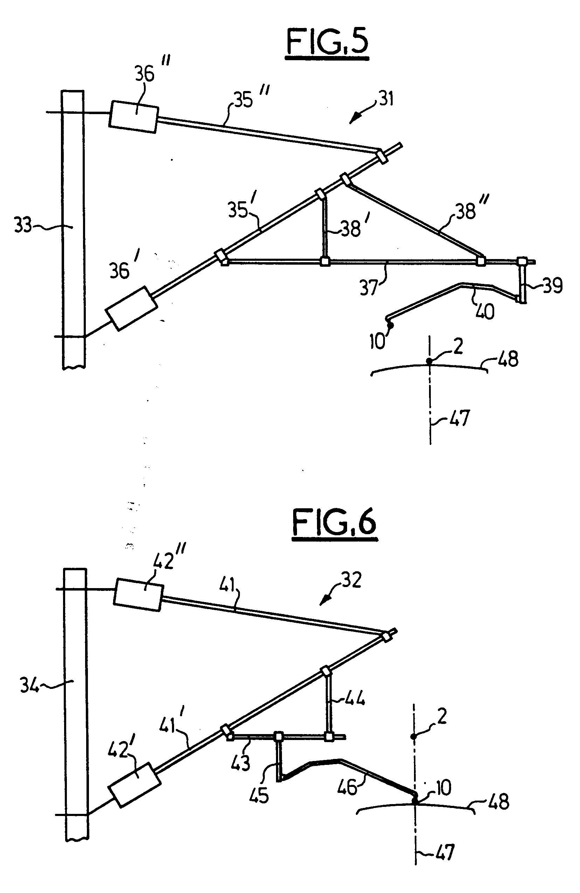

La figure 5 montre de manière détaillée le système de suspension 31 constitué de deux barres inclinées 35' et 35'', reliées chacune resp. à un bloc rigide 36' et 36'' fixé au poteau 33. La barre inférieure 35' porte une barre horizontale 37 maintenue par deux barres de renfort 38' et 38''. A l'extrémité de la barre 37 est fixée une potence 39 qui porte un bras 40, lui-même porteur du conducteur 10 par l'intermédiaire d'un isolateur électrique non représenté.

La figure 6 montre de manière détaillée le système de suspension 32 constitué de deux barres inclinées 41' et 41'', reliées chacune resp. à un bloc rigide 42' et 42'' fixé au poteau 34. La barre inférieure 41 porte une barre horizontale 43 maintenue par une barre de renfort 44. Approximativement au milieu de la barre 41, est fixé une potence 45 qui porte un bras 46, lui-même porteur du conducteur 10 par l'intermédiaire d'un isolateur électrique non représenté.

Les dégagements latéraux et verticaux du conducteur 2 et des conducteurs 10 par rapport à la voie ressortent clairement des figures 3,4,5 et 6.

En ce qui concerne le conducteur 2, la figure 3 montre le dégagement latéral du câble de tension 3 du conducteur 2, entre la console d'extrémité 5 et le poteau 16. La figure 4 montre, de la droite vers la gauche, le conducteur 2 qui est sensiblement à hauteur constante dans toute la zone Z, puis le dégagement vertical vers le haut du conducteur 2 sensiblement à hauteur de la console intermédiaire 7, jusqu'à la console d'extrémité 5, et enfin le dégagement vertical vers le haut du câble de tension 3 qui prolonge le conducteur 2. Bien entendu, les mêmes dégagements verticaux et latéraux se retrouvent à l'autre extrémité du dispositif d'escamotage. La figure 3 montre, de la gauche vers la droite, le conducteur 10 qui est à hauteur constante par rapport à la voie, puis son dégagement latéral qui s'effectue sensiblement à partir du dispositif de suspension 31. La figure 4 montre le dégagement vertical de ce conducteur 10, sensiblement au niveau du système de suspension 32. La figure 5 montre que, vers le dispositif 31, le conducteur 10 est plus haut que le conducteur 2 et légèrement décalé de l'axe 47 de la voie 12. La figure 6 montre que vers le dispositif 32, le conducteur 2 est au-dessus du conducteur 10 et tous les deux sont sensiblement dans l'axe de la voie.

Les conducteurs 2 et les deux conducteurs 10 sont alimentés électriquement par des moyens connus.

La ligne d'alimentation peut être une installation en site 1500 Volts continu ou 25 kVolts alternatifs, et le dispositif d'escamotage peut comporter un autre conducteur souple escamotable bifilaire.

Le pantographe 48 d'une locomotive qui vient de la gauche de la figure 1 pour entrer dans la zone Z, prend son courant électrique sur, successivement, la caténaire du réseau non représentée, le conducteur 10, puis entre les dispositifs de raccordement 13 et 15, le conducteur 2 sur toute la longueur de la zone Z. La locomotive s'arrête à un endroit précis juste au-delà du rail 9, pour que chaque wagon se trouve en face d'une installation de manutention.

L'opération d'escamotage s'effectue alors de la manière suivante. On actionne le ou les moyens moteur et le déplacement longitudinal du câble 8 provoque la rotation de toutes les consoles 5, 6, 7, donc l'escamotage latéral du conducteur 2, comme illustré sur la figure 2.

Comme cela a été dit précédemment, le conducteur 2 est fixé à l'extrémité de la console centrale et il subit un déplacement longitudinal égal à la longueur du bras porteur, ce déplacement étant compensé par le déplacement vertical des deux contrepoids 19 fixés à l'extrémité des câbles de tension 3 et 4. Les deux contrepoids 19 se déplacent donc verticalement et dans un sens opposé l'un à l'autre.

Le pantographe de la motrice est abaissé. Le conducteur 2 et les deux conducteurs 10 sont mis hors tension, tandis que les caténaires du réseau restent sous tension.

Dès que les opérations de manutention sont terminées, on dégage les appareils de manutention et on commande le ou les moyens moteur en sens inverse, afin de ramener le conducteur 2 au-dessus de la voie.

On alimente à nouveau le conducteur 2 et les deux conducteurs 10.

Le pantographe de la locomotive est relevé et celle-ci peut alors entraîner les wagons en-dehors de la zone Z.

Cette ligne d'alimentation selon l'invention permet, comme cela ressort clairement de la description, un escamotage total de la caténaire, tout le long de la zone de manutention et de stockage.

## Revendications

1. Dispositif (1) permettant l'alimentation électrique aérienne de véhicules circulant sur une voie ferrée (12), comportant au moins un conducteur souple (2) escamotable horizontalement et parallèlement à la voie ferrée sur une longueur au moins égale à celle d'une zone de manutention et de stockage (Z), caractérisé en ce que le conducteur souple (2) est suspendu à une extrémité de deux moyens de suspension (5) ou de plus de deux (5,6,7) parallèles entre eux, pivotant horizontalement et simultanément d'environ 1/4 de tour, le conducteur souple (2) étant à chacune de ses extrémités, relié à un câble de tension (3,4) qui est guidé pour être écarté de la voie et tendu par un moyen de tension (19).

2. Dispositif selon la revendication 1, caractérisé en ce que chaque moyen de suspension (5,6,7) comporte un bras porteur (5A,6A,7A) qui porte le conducteur souple, et un bras d'entraînement (5B,6B,7B) relié à un moyen d'entraînement (8).

3. Dispositif selon la revendication 2, caractérisé en ce que le bras porteur et le bras d'entraînement de chaque moyen de suspension forment entre eux un angle d'environ 135°C.

4. Dispositif selon la revendication 3, caractérisé en ce que les moyens de suspension comprennent un moyen de suspension central (6), deux moyens de suspension d'extrémité (5) et des moyens de suspension intermédiaires (7), le conducteur souple (2) étant relié mécaniquement au moyen de suspension central (6).

5. Dispositif selon l'une quelconque des revendications 2 à 4, caractérisé en ce que l'extrémité de chaque bras d'entraînement est reliée mécaniquement au moyen d'entraînement (8) par l'intermédiaire d'un dispositif mécanique tournant autour d'un axe vertical.

6. Dispositif selon la revendication 5, caractérisé en ce que le moyen d'entraînement (8) est un câble "sans fin" tendu entre deux poulies et entraîné directement par un moyen moteur et/ou par l'intermédiaire du bras d'entraînement (6B) du moyen de suspension central (6), lui-même entraîné directement par un autre moyen moteur.

7. Ligne d'alimentation électrique aérienne, caractérisée en ce qu'elle comporte un dispositif selon l'une quelconque des revendications 1 à 6 et à chaque extrémité du dispositif, un autre conducteur souple (10) s'étendant entre une zone (2) de manutention et de stockage, et une ligne à caténaires du réseau.

8. Ligne d'alimentation électrique aérienne selon la revendication 7, caractérisée en ce que les autres conducteurs souples (10) sont suspendus chacun à une extrémité de poteaux (33,34) munis chacun d'un moyen de suspension (31,32).

9. Ligne d'alimentation électrique aérienne selon la revendication 8, caractérisée en ce que les deux autres conducteurs souples (10) sont, à chacune de leurs extrémités, reliés à un câble de tension (11) qui est guidé pour être écarté de la voie et tendu par un moyen de tension (30).

## Patentansprüche

1. Vorrichtung (1), die die oberirdische Stromversorgung von auf einem Schienenweg (12) laufenden Fahrzeugen gestattet, umfassend wenigstens eine flexible Leitung (2), die horizontal und parallel zum Schienenweg über eine Länge wenigstens gleich derjenigen einer Handhabungs- und Speicherzone (Z) einziehbar ist, **dadurch gekennzeichnet,** daß die flexible Leitung (2) an einem Ende von zwei (5) oder mehr als zwei (5, 6, 7) zueinander parallelen Aufhängungseinrichtungen aufgehängt ist, die sich horizontal und gleichzeitig ungefähr um 1/4 Umdrehung drehen, wobei die flexible Leitung (2) an jedem ihrer Enden mit einem Spannseil (3, 4) verbunden ist, das geführt ist, damit es sich im Abstand vom Weg befindet, und durch eine Spanneinrichtung (19) gehalten ist.

2. Vorrichtung nach Anspruch 1, dadurch **gekenn****zeichnet,** daß jedes Aufhängungsmittel (5, 6, 7) einen Tragarm (5A, 6A, 7A), der die flexible Leitung trägt, und einen Mitnahmearm (5B, 6B, 7B) umfaßt, der mit einer Mitnahmeeinrichtung (8) verbunden ist.

3. Vorrichtung nach Anspruch 2, dadurch **gekenn****zeichnet,** daß der Tragarm und der Mitnahmearm jeder Aufhängungseinrichtung miteinander einen Winkel von etwa 135°C bilden.

4. Vorrichtung nach Anspruch 3, dadurch **gekenn****zeichnet,** daß die Aufhängungseinrichtungen eine zentrale Aufhängungseinrichtung (6), zwei Endaufhängungseinrichtungen (5) und Zwischenaufhängungseinrichtungen (7) aufweisen, wobei die elastische Leitung (2) mechanisch mit der zentralen Aufhängungseinrichtung (6) verbunden ist.

5. Vorrichtung nach einem beliebigen der Ansprüche 2 bis 4, dadurch **gekennzeichnet,** daß das Ende jedes Mitnahmearms mittels einer sich um eine vertikale Achse drehenden mechanischen Vorrichtung mechanisch mit der Mitnahmeeinrichtung (8) verbunden ist.

6. Vorrichtung nach Anspruch 5, dadurch **gekenn****zeichnet,** daß die Mitnahmeeinrichtung (8) ein "Endlos"-Kabel ist, das zwischen zwei Scheiben gespannt und direkt mittels einer Antriebseinrichtung und/oder mittels des Mitnahmearms (6B) der zentralen Aufhängungseinrichtung (6) mitgenommen wird, die selbst direkt mittels einer weiteren Antriebseinrichtung mitgenommen wird.

7. Oberirdische elektrische Versorgungsleitung, dadurch **gekennzeichnet,** daß sie eine Vorrichtung nach einem beliebigen der Ansprüche 1 bis 6 und an jedem Ende der Vorrichtung umfaßt, wobei sich eine weitere flexible Leitung (10) zwischen einer Handhabungs- und Speicherzone (Z) und einer Kettenleitung des Netzes erstreckt.

8. Oberirdische elektrische Versorgungsleitung nach Anspruch 7, dadurch **gekennzeichnet,** daß die weiteren flexiblen Leitungen (10) jeweils an einem Ende von Masten (33, 34) aufgehängt sind, die jeweils mit einer Aufhängungseinrichtung (31, 32) versehen sind.

9. Oberirdische elektrische Versorgungsleitung nach Anspruch 8, dadurch **gekennzeichnet,** daß die beiden weiteren flexiblen Leitungen (10) an jedem ihrer Enden mit einem Spannkabel (11) verbunden sind, das geführt ist, damit es sich im Abstand vom Weg und durch eine Spanneinrichtung (30) gespannt befindet.

## Claims

1. Device (1) allowing the overhead electrical feeding of vehicles running on a railway track (12), including at least one flexible conductor (2) which is horizontally retractable parallel to the railway track over a length at least equal to that of a handling and storage zone (Z), characterized in that the flexible conductor (2) is suspended at one end of two suspension means (5) or of more than two suspension means (5, 6, 7) parallel to each other, pivoting horizontally and simultaneously approximately a quarter of a turn, the flexible conductor (2) being connected, at each of its ends, to a tension cable (3, 4) which is guided so as to be at a certain distance from the track and tensioned by a tensioning means (19).

2. Device according to Claim 1, characterized in that each suspension means (5, 6, 7) includes a carrier arm (5A, 6A, 7A) which carries the flexible conductor, and a driving arm (5B, 6B, 7B) connected to a driving means (8).

3. Device according to Claim 2, characterized in that the carrier arm and the driving arm of each suspension means form an angle of approximately 135° between them.

4. Device according to Claim 3, characterized in that the suspension means comprise a central suspension means (6) , two end suspension means (5) and intermediate suspension means (7), the flexible conductor (2) being connected mechanically to the central suspension means (6).

5. Device according to any one of Claims 2 to 4, characterized in that the end of each driving arm is connected mechanically to the driving means (8) via a mechanical device rotating about a vertical axis.

6. Device according to Claim 5, characterized in that the driving means (8) is an "endless" cable tensioned between two pulleys and driven directly by a motor means and/or via the driving arm (6B) of the central suspension means (6), which is itself driven directly by another motor means.

7. Overhead electrical feed line, characterized in that it includes a device according to any one of Claims 1 to 6 and at each end of the device, another flexible conductor (10) extending between a handling and storage zone (Z) and a catenary line of the network.

8. Overhead electrical feed line according to Claim 7, characterized in that the other flexible conductors (10) are each suspended at one end of posts (33, 34) which are each fitted with a suspension means (31, 32).

9. Overhead electrical feed line according to Claim 8, characterized in that the two other flexible conductors (10) are connected, at each of their ends, to a tension cable (11) which is guided so as to be at a certain distance from the track and tensioned by a tensioning means (30).
